# EUROPÄISCHE PATENTSCHRIFT

(11) **EP 2 202 855 B1**
(45) Veröffentlichungstag und Bekanntmachung des Hinweises auf die Patenterteilung: **10.07.2019**
(21) Anmeldenummer: 09015460.0
(22) Anmeldetag: 15.12.2009
(51) Int. Cl.: H02G 3/12, H02G 3/14

(54) **Elektrisches Installationsgerät mit Federmittel**
Electric installation device with spring
Appareil d'installation électrique doté d'un moyen de ressort

(30) Priorität: 24.12.2008 DE 102008063109
(43) Veröffentlichungstag der Anmeldung: 30.06.2010
(73) Patentinhaber: Merten GmbH, 51674 Wiehl (DE)
(72) Erfinder: Ansorge, Rainer, 51709 Marienheide (DE)

(56) Entgegenhaltungen:
- CH-A5- 696 899
- DE-B1- 1 775 074
- DE-B3-102006 018 800
- DE-U1- 20 314 538

## Beschreibung

Die Erfindung betrifft ein elektrisches Installationsgerät nach dem Oberbegriff des Patentanspruches 1.

Elektrische Installationsgeräte werden im Rahmen der Gebäudeinstallationstechnik sowohl bei der Erstausstattung als auch im Nachrüstbereich eingesetzt. Häufig weist ein derartiges Installationsgerät einen Sockel auf, der grundlegende Funktionalitäten besitzt, sowie ein daran befestigtes Frontelement, das durch unterschiedliche Formen und Farben Varianten des Installationsgerätes ermöglicht. Als Installationsgeräte werden Steckdosen, Schalter, Taster und weitere Elektronikgeräte der elektrischen Installationstechnik verstanden.

Aus dem Stand der Technik ist ein Installationsgerät mit einem an einem metallischen Tragrahmen befestigten Gerätesockel und einem dem Gerätesockel vorgesetzten Betätigungsorgan bekannt. An der Rückseite des Betätigungsorgans ist eine Trägerplatte angeordnet, auf welcher mindestens eine Platine montiert ist und welche abstehende Federklemmen aufweist, die in entsprechende Öffnungen des Tragrahmens eingesteckt werden, wodurch die Trägerplatte am Gerätesockel festgehalten wird.

Aus der DE 1 775 074 B und aus der DE 203 14 538 U1 ist jeweils ein Installationsgerät bekannt, dessen Abdeckplatte mittels eines aus einem Draht bestehenden und M-förmig gebogenen Federmittels an einem Gerätesockel befestigt werden kann. Das Federmittel ist rückseitig der Abdeckplatte befestigt. Die jeweiligen Enden der beiderseitigen Schenkel des Federmittels sind als Klemmhaken ausgebildet, die eine gelochte Klemmplatte an dem Gerätesockel durch- und hintergreifen.

Die Aufgabe der vorliegenden Erfindung besteht darin, ein elektrisches Installationsgerät mit einem stabilen und sicheren Befestigungsmittel zwischen einem Tragrahmen und einem Geräteelement zu schaffen.

Gelöst wird diese Aufgabe durch die in Patentanspruch 1 angegebenen Merkmale. Vorteilhafte Ausgestaltungen ergeben sich aus der Beschreibung, den Zeichnungen und den Unteransprüchen.

Die Erfindung gemäß dem Anspruch 1 weist den Vorteil auf, dass durch ein erfindungsgemäßes Federmittel bei der Montage und Demontage eines Geräteelementes an einem Tragrahmen eines Installationsgerätes eine ausreichend hohe Federkraft bei gleichzeitig notwendiger Flexibilität möglich ist. Somit ist eine verbesserte Stabilität und eine sehr hohe Lebensdauer des gesamten Befestigungssystems gewährleistet.

Das Federmittel ist als M-fömiger Körper ausgebildet und dessen Schenkel weisen Rastnasen auf, dessen Mittelteil ist bis in die Nähe einer Basis heruntergezogen und dessen Schenkel haben eine gemeinsame Basis, wobei die Basis rechtwinklig abgebogen ist.

Die geschlossene Geometrie des Federmittels und eine rechteckige Querschnittsform des Federmaterials ermöglicht eine optimale Kraftentwicklung bei der Befestigung eines Geräteelementes an dem Tragrahmen. Eine auf das Federmittel wirkende Kraft verteilt sich vollständig in dem geschlossenen System, so dass eine effiziente Kraftverteilung erfolgt. Da ein geschlossenes System besteht, kann auch dessen Konfiguration (Form, Abmessungen) hinsichtlich der Kraftverteilung weitgehend unabhängig von äußeren Einflussgrößen erfolgen.

Das Federmittel besteht aus einem flächigen Material beispielweise Metallblech. Durch diese Ausbildung wird eine flache Bauform ermöglicht, so dass ein größtmöglicher Bauraum im Innenbereich eines Installationsgerätes erhalten bleibt. Die Herstellung aus einem flächigem Material mittels Stanzens verursacht geringstmögliche Herstellungskosten.

Geräteelemente können mehrteilig ausgebildet sein und beispielsweise Schalter, Taster, Display oder Steckdose aufweisen, die von einer Blende und/oder einem Rahmen umgeben, so dass je nach Ausführung an einem dieser Elemente das Federmittel befestigt ist. Das Federmittel greift dann in eine komplementäre Tasche in dem Tragrahmen.

Weitere Einzelheiten, Merkmale und Vorteile der Erfindung ergeben sich aus nachfolgender Beschreibung eines bevorzugten Ausführungsbeispieles anhand der Zeichnungen.

Es zeigen:

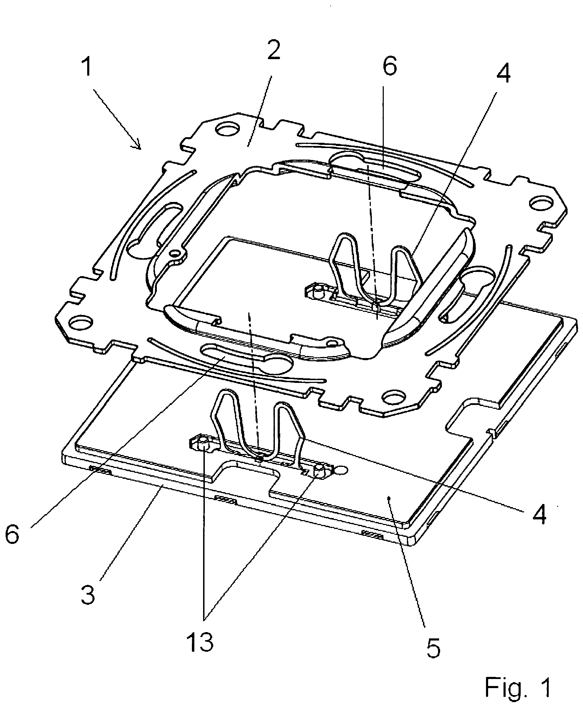

- Fig. 1: schematisch ein Installationsgerät in Explosionsansicht und

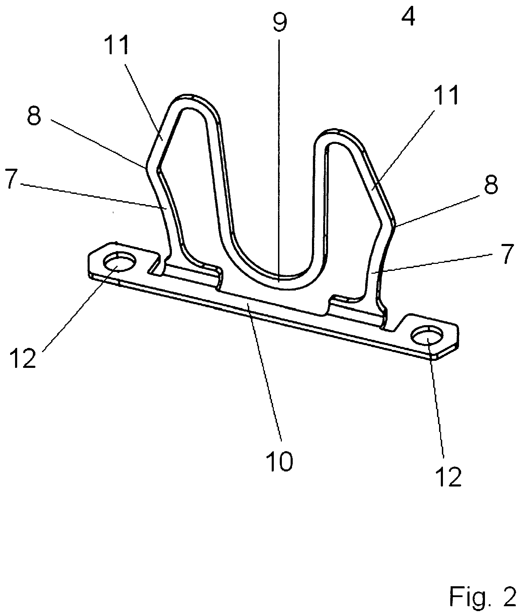

- Fig. 2: in vergrößerter Darstellung ein Federmittel.

Gleiche oder gleichwirkende Bauteile sind in der nachfolgenden Beschreibung mit gleichen Bezugszeichen versehen.

Nachfolgend wird der Aufbau und die Funktionsweise des erfindungsgemäßen elektrischen Installationsgerätes 1 schematisch beschrieben.

Ein Installationsgerät 1 besteht aus einem nicht dargestellten Gerätesockel und einem Tragrahmen 2, an dem ein Geräteelement 3 mittels eines Federmittels 4 lösbar befestigt werden kann. Das Federmittel 4 ist mittels einer Verschraubung, Verpressung oder Ultraschallschweißen an der Rückseite 5 des Geräteelementes 3 befestigt werden. Des weiteren kann das Federmittel 4 durch Umspritzen bereits bei der Herstellung des Geräteelementes integriert werden. Die Federmittel 4 greifen bei der Montage an dem Tragrahmen 2 federnd in komplementäre Taschen 6 ein.

Das Federmittel 4 ist als M-fömiger Körper ausgebildet und dessen Schenkel 7 weisen Rastnasen 8 auf, dessen Mittelteil 9 ist bis in die Nähe einer Basis 10 heruntergezogen und dessen Schenkel 7 haben eine gemeinsame Basis 10, wobei die Basis 10 rechtwinklig abgebogen ist. Die beiden Schenkel 7 weisen je eine Anlaufschräge 11 auf. Die Basis 10 weist Befestigungsmittel 12 in Form von Öffnungen auf, die mit Stiften 13 am Geräteelement 3 zusammenwirken und beispielsweise in den Öffnungen verpresst werden. Das Federmittel 4 ist aus einem flächigen Material beispielweise Metallblech ausgestanzt.

### Bezugszeichenliste

- 1: Installationsgerät
- 2: Tragrahmen
- 3: Geräteelement
- 4: Federmittel
- 5: Rückseite
- 6: Tasche
- 7: Schenkel
- 8: Rastnase
- 9: Mittelteil
- 10: Basis
- 11: Anlaufschräge
- 12: Befestigungsmittel
- 13: Stift

## Patentansprüche

1. Elektrisches Installationsgerät umfassend einen Gerätesockel, der mittels eines Tragrahmens (2) in einem Installationsgehäuse befestigbar ist, und ein frontseitig angeordnetes Geräteelement (3), das durch ein Federmittel (4) lösbar an dem Tragrahmen (2) befestigbar ist, wobei das Federmittel (4) als M-fömiger Körper ausgebildet ist, dessen Schenkel (7) Rastnasen (8) aufweisen und dessen Mittelteil (9) bis in die Nähe einer Basis (10) heruntergezogen ist, **dadurch gekennzeichnet, dass** die Schenkel (7) eine gemeinsame Basis (10) haben, wobei die Basis (10) rechtwinklig abgebogen ist, und dass das Federmittel (4) aus einem flächigen Material besteht.

2. Elektrisches Installationsgerät nach Patentanspruch 1, **dadurch gekennzeichnet, dass** das Federmittel (4) aus metallischem Material besteht.

3. Elektrisches Installationsgerät nach einem der vorhergehenden Patentansprüche, **dadurch gekennzeichnet, dass** das Federmittel (4) aus gestanztem Material besteht.

4. Elektrisches Installationsgerät nach einem der vorhergehenden Patentansprüche, **dadurch gekennzeichnet, dass** die beiden Schenkel (7) je eine Anlaufschräge (11) aufweisen.

5. Elektrisches Installationsgerät nach einem der vorhergehenden Patentansprüche, **dadurch gekennzeichnet, dass** das Federmittel (4) an dem Geräteelement (3) angeordnet ist.

6. Elektrisches Installationsgerät nach einem der vorhergehenden Patentansprüche, **dadurch gekennzeichnet, dass** das Federmittel (4) mittels Verpressen oder Ultraschallschweißen an dem Geräteelement (3) befestigbar ist.

7. Elektrisches Installationsgerät nach einem der vorhergehenden Patentansprüche, **dadurch gekennzeichnet, dass** die Basis (10) Befestigungsmittel (12) aufweist.

8. Elektrisches Installationsgerät nach einem der vorhergehenden Patentansprüche, **dadurch gekennzeichnet, dass** das elektrische Installationsgerät (1) als elektrische Steckdose, Schalter, Taster, Bedienteil und/oder Display ausgeführt ist.

## Claims

1. Electrical installation device comprising a device cap, which can be fastened in an installation housing by means of a supporting frame (2), and a device element (3), which is arranged on the front side and can be fastened in a releasable manner to the supporting frame (2) by a spring means (4), wherein the spring means (4) is designed as an M-shaped body, the limbs (7) of which M-shaped body have latching lugs (8) and the central part (9) of which M-shaped body is pulled downwards until it is close to a base (10), **characterized in that** the limbs (7) have a common base (10), wherein the base (10) is bent away at a right angle, and **in that** the spring means (4) is composed of a flat material.

2. Electrical installation device according to Patent Claim 1, **characterized in that** the spring means (4) is composed of metal material.

3. Electrical installation device according to either of the preceding patent claims, **characterized in that** the spring means (4) is composed of stamped material.

4. Electrical installation device according to one of the preceding patent claims, **characterized in that** the two limbs (7) each have a run-on bevel (11).

5. Electrical installation device according to one of the preceding patent claims, **characterized in that** the spring means (4) is arranged on the device element (3).

6. Electrical installation device according to one of the preceding patent claims, **characterized in that** the spring means (4) can be fastened to the device element (3) by means of pressing or ultrasonic welding.

7. Electrical installation device according to one of the preceding patent claims, **characterized in that** the base (10) has fastening means (12).

8. Electrical installation device according to one of the preceding patent claims, **characterized in that** the electrical installation device (1) is embodied as an electrical plug socket, switch, pushbutton, operator control part and/or display.

## Revendications

1. Appareil d'installation électrique comprenant un socle d'appareil, qui peut être fixé dans un boîtier d'installation au moyen d'un cadre de support (2), et un élément d'appareil (3) disposé frontalement, qui peut être fixé de façon séparable au cadre de support (2) par un moyen de ressort (4), dans lequel le moyen de ressort (4) est constitué par un corps en forme de M, dont les branches (7) présentent des nez d'encliquetage (8) et dont la partie centrale (9) est étirée vers le bas jusqu'à proximité d'une base (10), **caractérisé en ce que** les branches (7) ont une base commune (10), dans lequel la base (10) est pliée à angle droit et **en ce que** le moyen de ressort (4) est composé d'un matériau plat.

2. Appareil d'installation électrique selon la revendication 1, **caractérisé en ce que** le moyen de ressort (4) est composé d'un matériau métallique.

3. Appareil d'installation électrique selon l'une quelconque des revendications précédentes, **caractérisé en ce que** le moyen de ressort (4) est composé d'un matériau estampé.

4. Appareil d'installation électrique selon l'une quelconque des revendications précédentes, **caractérisé en ce que** les deux branches (7) présentent chacune une rampe d'entrée (11).

5. Appareil d'installation électrique selon l'une quelconque des revendications précédentes, **caractérisé en ce que** le moyen de ressort (4) est disposé sur l'élément d'appareil (3).

6. Appareil d'installation électrique selon l'une quelconque des revendications précédentes, **caractérisé en ce que** le moyen de ressort (4) peut être fixé à l'élément d'appareil (3) par pressage ou soudage aux ultrasons.

7. Appareil d'installation électrique selon l'une quelconque des revendications précédentes, **caractérisé en ce que** la base (10) présente des moyens de fixation (12).

8. Appareil d'installation électrique selon l'une quelconque des revendications précédentes, **caractérisé en ce que** l'appareil d'installation électrique (1) est constitué par une prise de courant électrique, un interrupteur, un bouton-poussoir, une pièce de commande et/ou un afficheur.
